# FASCICULE DE BREVET EUROPEEN

(11) **EP 2 925 606 B1**
(45) Date de publication et mention de la délivrance du brevet: **01.01.2020**
(21) Numéro de dépôt: 13796101.7
(22) Date de dépôt: 29.11.2013
(51) Int. Cl.: B64C 25/40

(54) **SYSTÈME DE MOTORISATION DE ROUE, NOTAMMENT D'UN AÉRONEF**
RADMOTORISIERUNGSSYSTEM, INSBESONDERE FÜR EIN FLUGZEUGRAD
WHEEL MOTORIZING SYSTEM, NOTABLY FOR AN AIRCRAFT WHEEL

(30) Priorité: 03.12.2012 FR 1261561
(43) Date de publication de la demande: 07.10.2015
(73) Titulaire: Compagnie Générale des Etablissements Michelin, 63000 Clermont-Ferrand (FR)
(72) Inventeur: BLANC, Claude, F-63040 Clermont-Ferrand Cedex 09 (FR); ESSINGER, Olivier, F-63040 Clermont-Ferrand Cedex 09 (FR)
(74) Mandataire: Noel, Luminita
(86) Numéro de dépôt international: PCT/EP2013/075049
(87) Numéro de publication internationale: WO 2014/086670

(56) Documents cités:
- WO-A1-95/29094
- WO-A1-2009/086804
- WO-A1-2011/134503
- US-A- 1 952 434
- US-A- 2 684 140
- US-A1- 2006 065 779
- US-A1- 2012 138 734

## Description

La présente invention concerne le domaine des aéronefs et notamment la motorisation de roue lors de la circulation au sol de l'aéronef.

Plus particulièrement, l'invention concerne la motorisation d'une roue d'un hélicoptère.

On distingue généralement plusieurs phases de circulation au sol d'un aéronef avant la phase de décollage ou après la phase d'atterrissage : une phase de déplacement à très faible vitesse, par exemple inférieure à 5 km/h, appelée couramment « phase de manœuvre » destinée à déplacer l'aéronef d'une place de stationnement/stockage à une zone de chargement et une phase de déplacement en marche avant à faible vitesse, par exemple de l'ordre de 20 km/h, appelée couramment en termes anglo-saxon « taxiing ». La phase de manœuvre peut comprendre un déplacement en marche arrière, par exemple pour sortir d'un bâtiment tel qu'un hangar de stockage et/ou un déplacement en marche avant afin d'arriver à une zone de chargement. Les déplacements lors de la phase de manœuvre sont réalisés à très faibles vitesses et généralement à l'aide de personnes se trouvant au sol à l'extérieur de l'aéronef.

La phase de manœuvre en marche arrière et/ou en marche avant à très faible vitesse est généralement réalisée à l'aide d'un véhicule automobile permettant de diriger l'aéronef, tel que par exemple un tracteur dédié appelé « tug » en termes anglo-saxons.

Une solution consiste à associer un moteur électrique à la roue de l'aéronef. Toutefois, la connexion directe entre la roue et le moteur oblige le moteur électrique à atteindre rapidement une vitesse de rotation élevée lors d'un atterrissage rapide, par exemple à 120 km/h et cela nécessite d'utiliser un moteur électrique capable de supporter une telle vitesse. De plus, du fait de la connexion permanente entre la roue et le moteur, la roue peut être bloquée en cas de blocage du moteur électrique ou des moyens de transmission.

On peut se référer au document WO 2011/073590 qui propose un système de motorisation autonome d'une roue d'un aéronef comprenant un bloc moteur relié aux roues par un unique système d'embrayage et porté par une partie non suspendue d'une jambe de suspension. Le système d'embrayage permet d'embrayer ou de débrayer le bloc moteur de la roue. Le bloc moteur est mobile par rapport à la roue dans une position débrayée lors de l'atterrissage ou du décollage et embrayée en marche arrière ou en marche avant lors du déplacement au sol à faible vitesse. Toutefois un tel système est complexe à réaliser et nécessite une connexion et une déconnexion physique entre le bloc moteur et la roue.

On peut également se référer au document US 3, 034, 748 qui décrit la motorisation des roues d'un hélicoptère pour le déplacement en phase de manœuvre, comprenant un bloc d'entraînement associé à chacune des roues de l'hélicoptère. Le bloc d'entraînement comporte un moteur hydraulique et est destiné à être monté de manière amovible sur la roue afin de l'entraîner. Chaque bloc d'entraînement est connecté à une pompe hydraulique par l'intermédiaire de valves commandées afin de piloter le sens de rotation de la roue associée. Une telle motorisation de roue permet de ne pas utiliser le rotor de l'hélicoptère pour déplacer l'aéronef. Toutefois, le bloc d'entraînement est couplé à la roue uniquement lors des phases de manœuvre puis découplé des roues. Il s'agit d'un système de motorisation externe, rapporté par rapport à l'hélicoptère.

La présente invention a donc pour but de remédier à ces inconvénients.

Un exemple de l'art antérieur correspondant au préambule de la revendication 1 est divulgué dans le document WO 95/29094.

La présente invention vise à prévoir un système de motorisation de roue, intégré au train d'atterrissage et permettant le déplacement en phase de manœuvre et en phase de taxiing, tout en assurant la protection du système de motorisation, par exemple lors de l'atterrissage, du décollage ou des déplacements de l'aéronef à vitesse élevée.

L'invention a pour objet un système de motorisation de roue, notamment pour la circulation au sol d'un aéronef, comprenant un moteur électrique, un organe d'entraînement solidaire du moyeu de la roue, un dispositif d'embrayage reliant l'arbre de sortie du moteur électrique à l'organe d'entraînement par l'intermédiaire de moyens de réduction.

Le dispositif d'embrayage comprend un dispositif de roue-libre permettant, en marche avant de l'aéronef, la transmission du couple de rotation uniquement dans un premier sens de transmission de couple.

On entend par « premier sens de transmission de couple », la transmission du couple de rotation du moteur électrique vers la roue et par « deuxième sens de transmission de couple », la transmission du couple de rotation de la roue vers le moteur.

Un tel système de motorisation est solidaire du train d'atterrissage et plus précisément du porte-moyeu de la roue. Il est donc embarqué directement sur l'aéronef. La protection du système de motorisation est assurée lors de l'atterrissage de l'aéronef à vitesse élevée. En effet, le dispositif de roue-libre ne permet la transmission du couple de rotation du moteur électrique vers la roue de l'aéronef que de manière unidirectionnelle, de sorte que lorsque l'aéronef atterrit ou circule à vitesse élevée en marche avant, le couple de rotation n'est pas transmis de la roue vers le moteur électrique. Le moteur électrique n'est pas, dans ce cas, entraîné en rotation par la roue, qui tourne librement grâce au dispositif de roue-libre. Le moteur est déconnecté automatiquement de la roue par le dispositif de roue-libre.

Le dispositif d'embrayage comprend des moyens de blocage de la fonction roue-libre du dispositif de roue-libre.

Ainsi, lorsque le dispositif de roue-libre est bloqué, le couple de rotation est transmis dans les deux sens de transmission de couple, en marche avant comme en marche arrière de l'aéronef.

Les moyens de blocage peuvent être actionnés manuellement depuis le sol. En effet, les phases de manœuvre de l'aéronef étant réalisées à proximité des bâtiments en présence de personnel extérieur à l'aéronef, il est aisé pour les opérateurs présents au sol d'actionner manuellement les moyens de blocage.

En variante, les moyens de blocage peuvent être actionnés à distance, par exemple par des moyens électriques tels qu'un vérin électrique à vis. Dans ce cas, on peut prévoir une sécurité permettant de désaccoupler les moyens de blocage lorsque la tension électrique devient inférieure à une valeur seuil.

L'alimentation du moteur électrique du système de motorisation, ainsi que des moyens de blocage du dispositif de roue-libre peut se faire au moyen d'une source d'alimentation présente sur l'aéronef, telle qu'une batterie embarquée ou par le réseau de bord de l'aéronef. En variante, on peut utiliser une source d'alimentation externe à l'aéronef, telle que par exemple, une batterie branchée lors des phases de manœuvre par des connexions électriques.

Avantageusement, les moyens de réduction comprennent un pignon moteur lié à l'arbre de sortie du moteur et engrenant avec un arbre intermédiaire.

Les moyens de réduction comprennent, par exemple, au moins deux étages de réduction et le dispositif de roue-libre peut être disposé entre les étages de réduction. En variante, le dispositif de roue-libre pourrait être disposé en amont ou en aval des étages de réduction.

Selon un mode de réalisation, les moyens de réduction comprennent trois étages de réduction.

Par exemple, le premier étage de réduction est constitué par l'engrenage du pignon moteur et d'une première roue dentée liée à un premier arbre intermédiaire, le deuxième étage de réduction est constitué par l'engrenage d'un premier pignon de réducteur lié au premier arbre intermédiaire et d'une deuxième roue dentée liée à un deuxième arbre intermédiaire, et le troisième étage de réduction est constitué par l'engrenage d'un deuxième pignon de réducteur lié au deuxième arbre intermédiaire et de l'organe d'entraînement.

Avantageusement, le dispositif d'embrayage est disposé entre les deuxième et troisième étages de réduction.

Selon l'invention, les moyens de blocage comprennent une cloche de blocage coaxiale audit dispositif de roue-libre et présentant sur sa périphérie des crabots axiaux d'entraînement espacés les uns des autres et destinés à coopérer avec des crabots de forme correspondante sur la deuxième roue dentée.

Les arbres intermédiaires sont, en outre, parallèles à l'axe du moyeu de la roue. En variante, on peut prévoir que les arbres intermédiaires ne soient pas parallèles à l'axe du moyeu, notamment par l'intégration d'engrenages permettant des renvois à 45° ou 90°.

L'organe d'entraînement est, par exemple, une couronne dentée.

Selon un mode de réalisation, le système de motorisation de roue comprend un moyen de protection mécanique contre un sur-couple apte à découpler l'organe d'entraînement du moyeu de roue lorsque le couple transmis au moyeu de roue par l'organe d'entraînement est supérieur à une valeur de seuil.

Selon un second aspect, l'invention concerne un aéronef comprenant au moins une roue munie d'un système de motorisation de roue tel que décrit précédemment. En effet, il est possible de motoriser uniquement un train avant comportant une unique roue ou une paire de roues, appelée généralement « nez » ou « nose » en terme anglo-saxons. On pourrait prévoir que ladite roue motorisée soit directrice, c'est-à-dire qu'elle soit associée à un système d'orientation, tel que par exemple un vérin électrique. Dans le cas d'une paire de roues, le vérin électrique peut être associé à un système de gestion différentielle des couples appliqués à chacune des roues. Ainsi, grâce au système de gestion différentielle des couples et lorsque la paire de roues est montée sur une jambe de train libre en rotation, il est possible de pivoter le train avant de 180° en appliquant un couple de rotation à une seule des roues motorisées. En conséquence, en marche arrière de l'aéronef, le couple de rotation est transmis des moteurs vers les roues motorisées, sans nécessité de moyens de blocage du dispositif de roue-libre. Des moyens de mesure de la position angulaire de la jambe du train avant sont nécessaires afin d'effectuer cette manœuvre. La jambe de train est capable d'être bloquée en rotation lors de l'atterrissage de l'aéronef.

On pourrait prévoir que le train avant de l'aéronef comprenne, en plus de la paire de roues motorisées, deux roues jumelées.

Dans un autre mode de réalisation, l'aéronef comprend au moins un train d'atterrissage pourvu d'au moins deux roues munies chacune d'un système de motorisation de roue tel que décrit précédemment.

Pour un aéronef comportant au moins un train principal non orientable et un train orientable, la motorisation des roues est de préférence réalisée sur au moins une des roues du train principal. Le train orientable peut, par exemple, être une roulette de queue dont l'orientation peut être bloquée par exemple lors de la phase de taxiing.

L'aéronef peut être un hélicoptère.

D'autres buts, caractéristiques et avantages de l'invention apparaîtront à la lecture de la description suivante, donnée uniquement à titre d'exemple non limitatif, et faite en référence aux dessins annexés sur lesquels :
- la figure 1 représente une vue en perspective d'une partie d'un train d'atterrissage d'un aéronef équipé d'une roue et d'un système de motorisation de roue selon l'invention ;
- la figure 2 représente une vue en perspective du système de motorisation de roue selon l'invention, représenté sans carter ;
- la figure 3 représente une vue en coupe selon l'axe X₁-X₁ de la figure 1 ;
- la figure 3a représente un détail de la figure 3 ;
- la figure 4 représente une vue en coupe selon l'axe X₂-X₂ de la figure 1, les moyens de blocage du dispositif de roue-libre n'étant pas actionnés ;
- la figure 5 représente en détail le dispositif d'embrayage de la figure 4, représenté sans carter, les moyens de blocage du dispositif de roue-libre n'étant pas actionnés ;
- la figure 6 représente en détail le dispositif d'embrayage de la figure 4, représenté sans carter, les moyens de blocage du dispositif de roue-libre étant actionnés ;
- la figure 7 représente une vue en coupe d'un système de motorisation de roue selon un autre mode de réalisation, les moyens de blocage du dispositif de roue-libre n'étant pas actionnés ; et
- la figure 8 représente la vue de la figure 7, les moyens de blocage du dispositif de roue-libre étant actionnés.

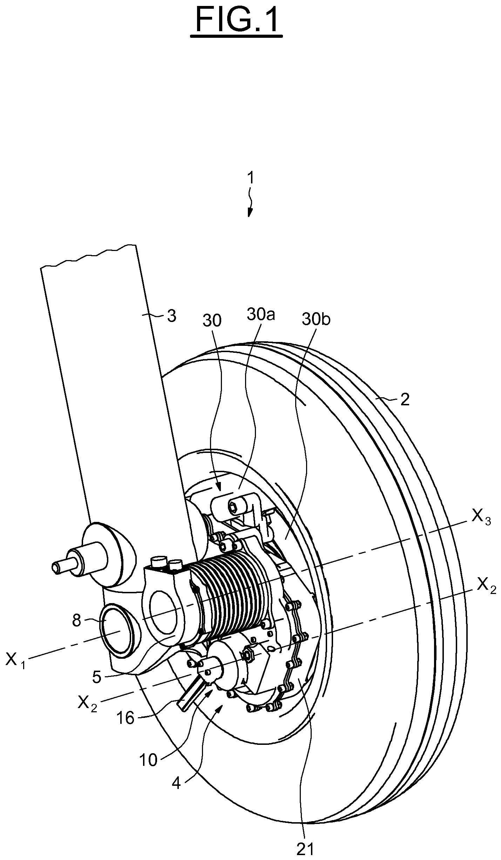

Telle qu'illustrée sur la figure 1, une partie d'un train d'atterrissage d'un aéronef, qui peut être par exemple un hélicoptère, référencée 1 dans son ensemble, comprend une roue 2, une jambe de train 3, supportant la roue 2 et un système de motorisation 4 de la roue 2 pour la circulation au sol de l'aéronef.

Le système de motorisation 4 de roue comprend un moteur électrique 5, tel que par exemple un moteur synchrone triphasé à aimants permanents et un organe d'entraînement 6, telle qu'une couronne dentée. La couronne dentée 6 est solidaire du moyeu 7 de la roue 2 et reliée à l'arbre de sortie 5a du moteur 5 par l'intermédiaire d'un dispositif d'embrayage 10 et de moyens de réduction 20. Le dispositif d'embrayage 10 et les moyens de réduction 20 sont logés dans un carter de réduction 21 visible sur la figure 1. Tel qu'illustré sur la figure 1, le système de motorisation de roue 4 comporte un système de freinage 30 monté sur le carter de réduction 21. Dans l'exemple illustré, le système de freinage 30 est un frein à disque comportant un disque 30b fixé sur le moyeu de roue 7 et des plaquettes de frein (non représentées) venant frotter de chaque côté du disque 30b. Les plaquettes de frein sont maintenues dans un étrier ou une chape de frein 30a fixé au carter de réduction 21. L'intégration d'un système de freinage 30 sur le système de motorisation de roue 4 est aisément effectuée par simple fixation de l'étrier de frein 30a sur le carter 21. Un tel système de freinage 30 est connu et ne sera pas davantage décrit.

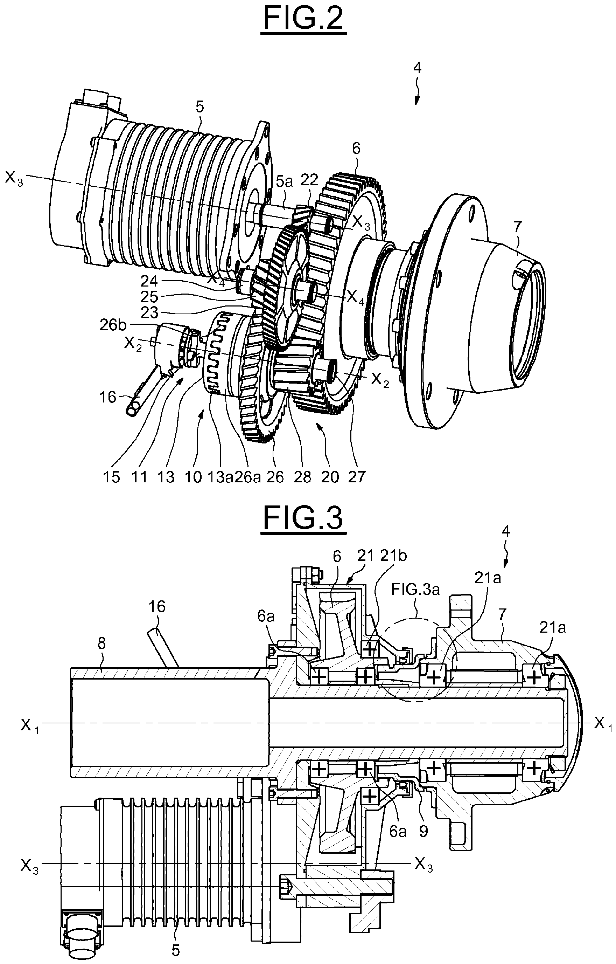

Tel qu'illustré en détail sur la figure 2, les moyens de réduction 20 comprennent un pignon moteur 22 lié à l'arbre de sortie 5a du moteur 5 d'axe X₃-X₃ et entraînant l'organe d'entraînement 6 par l'intermédiaire de trois étages de réduction. En variante, on pourrait prévoir un nombre inférieur ou supérieur d'étages de réduction entre le pignon moteur 22 et la couronne dentée 6.

Le premier étage de réduction est constitué par l'engrenage du pignon moteur 22 et d'une première roue dentée 23 liée à un premier arbre intermédiaire 24 d'axe X₄-X₄, le deuxième étage de réduction est constitué par l'engrenage d'un premier pignon de réducteur 25 lié au premier arbre intermédiaire 24 et d'une deuxième roue dentée 26 liée à un deuxième arbre intermédiaire 27 d'axe X₂-X₂, et le troisième étage de réduction est constitué par un deuxième pignon de réducteur 28 lié au deuxième arbre intermédiaire 27 et la couronne dentée 6 liée au moyeu 7 de roue 2.

Le premier arbre intermédiaire 24, la deuxième roue dentée 26 et le deuxième arbre intermédiaire 27 sont montés à rotation dans le carter 21 respectivement par l'intermédiaire des roulements 21e, 21d et 21c. La deuxième roue dentée 26 est en outre montée sur le deuxième arbre intermédiaire 27 par l'intermédiaire de roulements 26c.

Les roues dentées 23, 26 et la couronne dentée 6 comprennent, sur leur périphérie, des dentures (non référencées) pouvant être droites ou inclinées. Les pignons 22, 25, 28 sont pourvus également de dentures droites ou inclinées (non référencées). A titre d'exemple non limitatif, le rapport de réduction total est de l'ordre de 77. En variante, on pourrait prévoir tout autre rapport de réduction.

Les arbres intermédiaires 24, 27 sont parallèles à l'axe X₁-X₁ du moyeu 7 de la roue 2 et à l'axe X₃-X₃ du moteur 5. En variante, on pourrait prévoir que les arbres intermédiaires et/ou l'arbre du moteur ne soient pas parallèles à l'axe du moyeu, notamment par l'intégration d'engrenages permettant des renvois d'angle.

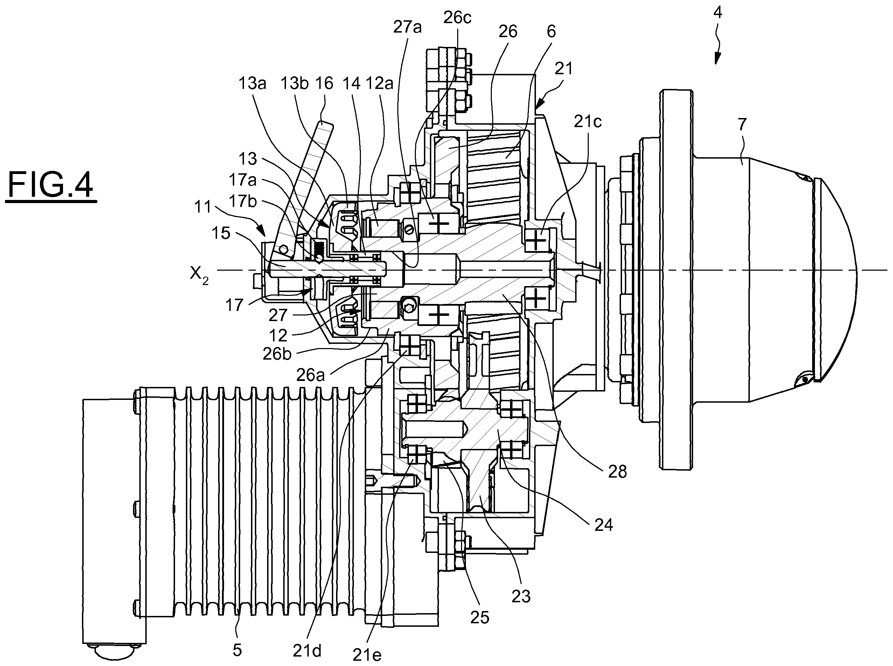

Tel qu'illustré sur la figure 2, le dispositif d'embrayage 10 comprend des moyens de blocage 11 décrits en détail en référence aux figures 4 à 6.

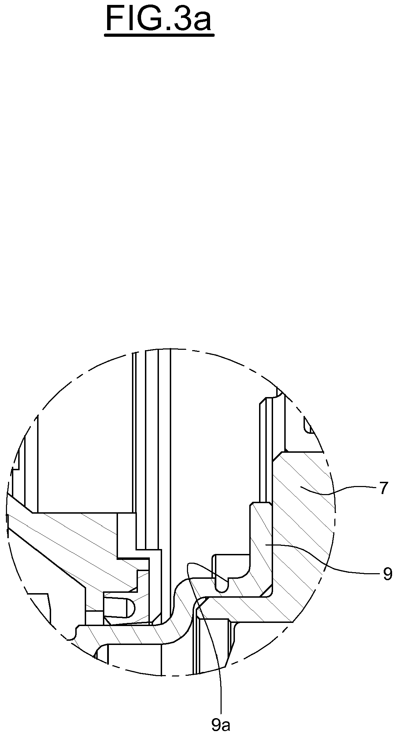

La figure 3 illustre une vue en coupe passant par l'axe X₁-X₁ de la roue 2, la roue n'étant pas représentée. La roue 2 est supportée par un moyeu de roue 7 monté à rotation par l'intermédiaire de roulements 21a sur un porte-moyeu 8 ou fusée de roue solidaire de la jambe de train 3. La couronne dentée 6, visible sur les figures 2 et 3, est solidaire du moyeu de roue 7, par l'intermédiaire par exemple d'un manchon de fixation 9 et montée à rotation par l'intermédiaire de roulements 6a, 21b sur le porte-moyeu 8 et dans le carter 21.

Tel qu'illustré en détail sur la figure 3a, le manchon de fixation 9 comprend une gorge annulaire 9a permettant au manchon de fixation 9 de se désolidariser du moyeu de roue 7, notamment lorsque le couple transmis au moyeu de roue 7 par l'organe d'entraînement 6 est trop important, par exemple supérieur à une valeur de seuil. La valeur de seuil peut, par exemple, être fixée au double du couple maximum transmissible au moyeu de roue 7 par le moteur électrique. La gorge annulaire 9a fait office de moyen de protection contre le sur-couple apte à se sectionner en cas de couple trop important et permet ainsi la protection de l'aéronef et du système de motorisation. En effet, en l'absence de cette protection lors de l'atterrissage de l'aéronef, si le système de motorisation de roue est bloqué, par exemple suite à un mauvais fonctionnement du dispositif de roue-libre ou suite à l'oubli de découplage des moyens de blocage, le pneu de la roue pourrait alors être forcé à glisser sur le sol ou à exercer un couple de freinage important, entraînant sa détérioration et le risque de perdre le contrôle de l'aéronef ou d'endommager le système de motorisation de roue.

On notera que n'importe quel moyen mécanique comportant une pièce agissant comme un fusible contre le sur-couple ou autorisant par exemple un glissement en cas de sur-couple pourrait être utilisé comme moyen de protection mécanique contre le sur-couple.

Les figures 4 à 6 illustrent une vue coupe passant par l'axe X₂-X₂ du deuxième arbre intermédiaire 27.

Le dispositif d'embrayage 10 comprend un dispositif de roue-libre 12, visible sur les figures 4 à 6, permettant, en marche avant de l'aéronef, la transmission du couple de rotation dans un premier sens de transmission de couple et ne permettant pas la transmission du couple de rotation dans un deuxième sens de transmission de couple. On entend par premier sens de transmission de couple, la transmission du couple de rotation du moteur électrique 5 vers la roue 2 et par deuxième sens de transmission, la transmission de couple de rotation de la roue 2 vers le moteur 5.

Le dispositif de roue-libre 12 permet donc, en marche avant de l'aéronef, la transmission unidirectionnelle du couple de rotation dans le premier sens de transmission de couple (du moteur électrique 5 vers la roue de l'aéronef), de sorte que le couple de rotation n'est pas transmis dans le deuxième sens de transmission, c'est à dire de la roue 2 vers le moteur électrique 5. La roue 2 étant alors débrayée peut tourner librement. Lorsque l'aéronef atterrit ou circule grâce à ses moyens principaux de propulsion, le couple de rotation de la roue 2 n'est pas transmis au moteur électrique 5 qui n'est donc pas entraîné en rotation par la roue 2 grâce au dispositif de roue-libre 12.

En marche arrière de l'aéronef au sol, le dispositif de roue-libre 12 ne permet pas la transmission du couple de rotation dans le premier sens de transmission de couple (du moteur 5 vers la roue 2) et permet la transmission du couple de rotation dans le deuxième sens de transmission de couple (de la roue 2 vers le moteur 5).

On entend par dispositif de roue-libre, un élément monté entre deux pièces concentriques comprenant généralement une bague intérieure montée sur un arbre de la première pièce et une bague extérieure montée dans un alésage de la deuxième pièce. Entre ces deux bagues se trouvent des éléments anti-retour interdisant la transmission de couple dans un sens, tels que par exemple des cliquets, des cames ou des rouleaux.

Tel qu'illustré sur les figures, le dispositif de roue-libre 12 comprend des éléments anti-retour 12a montés entre le deuxième et le troisième étage de réduction, notamment entre le deuxième arbre intermédiaire 27 et le moyeu 26a de la deuxième roue dentée 26. Ces éléments anti-retour 12a interdisent la transmission du couple de rotation dans le deuxième sens de transmission de couple (de la roue vers le moteur) en marche avant de l'aéronef et la transmission du couple de rotation dans le premier sens de transmission de couple (du moteur vers la roue) en marche arrière de l'aéronef.

Dans l'exemple illustré, le moyeu 26a de la deuxième roue dentée 26 fait office de bague extérieure pour les éléments anti-retour 12a et le deuxième arbre intermédiaire 27 fait office de bague intérieure pour les éléments anti-retour 12a. En variante, on pourrait prévoir des bagues intérieure et extérieure indépendantes rapportées dans les moyens de réduction. On notera que le dispositif de roue-libre peut être disposé à n'importe quel endroit entre deux étages de réduction, ainsi qu'en amont ou en aval des étages de réduction.

Tel qu'illustré en détail sur les figures 4 à 6, les moyens de blocage 11 sont destinés à bloquer la fonction roue-libre du dispositif de roue-libre 12. Ainsi, lorsque le dispositif de roue-libre 12 est bloqué, le couple de rotation est transmis dans les deux sens de transmission de couple, en marche avant comme en marche arrière de l'aéronef.

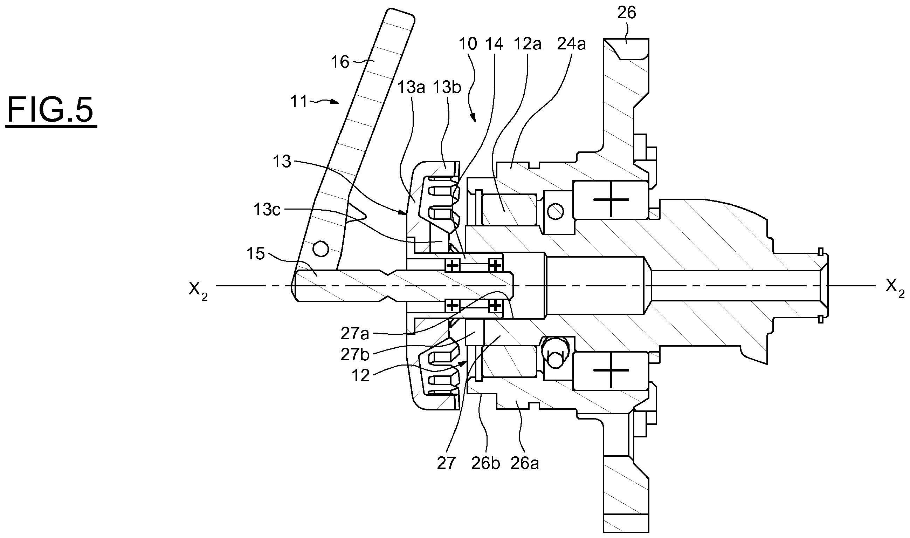

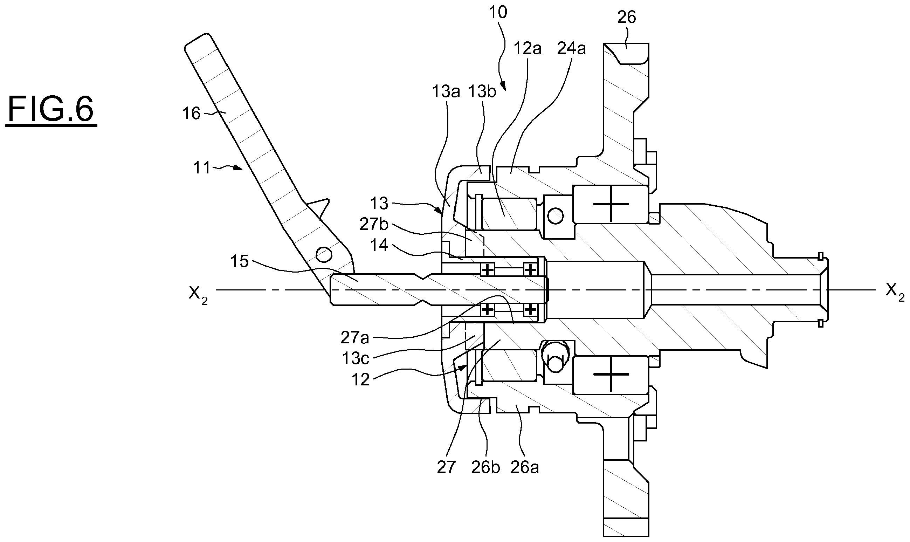

Les moyens de blocage 11, visible en détail sur les figures 5 et 6, comprennent un mécanisme à crabot 13 de même axe que l'axe du dispositif de roue-libre 12, et notamment coaxial avec le deuxième arbre intermédiaire 27 et la deuxième roue dentée 26. Le mécanisme à crabot 13 comprend une cloche de blocage 13a coopérant avec le moyeu 26a de la deuxième roue dentée 26. Un fourreau axial 14 est solidaire de la cloche de blocage 13a et coopère avec un perçage axial 27a pratiqué dans le deuxième arbre intermédiaire 27.

La cloche de blocage 13a présente sur sa périphérie des crabots 13b d'entraînement. Les crabots 13b sont disposés axialement, espacés les uns des autres et coopèrent frontalement avec des évidements 26b de forme correspondante pratiqués sur la périphérie du moyeu 26a de la deuxième roue dentée 26. En d'autres termes, les crabots d'entrainement 13b coopèrent avec la bague extérieure du dispositif de roue-libre 12.

Des crabots d'entraînement similaires 13c sont présents sur la partie centrale de la cloche de blocage 13a autour du fourreau axial 14. Les crabots 13c sont espacés les uns des autres et coopèrent frontalement avec des évidements 27b de forme correspondante présents à l'extrémité du deuxième arbre intermédiaire 27. En d'autres termes, les crabots d'entrainement 13c coopèrent avec la bague intérieure du dispositif de roue-libre 12. Alternativement cette dernière liaison en rotation pourrait être permanente, le fourreau 14 présentant par exemple des nervures pratiquées sur sa surface extérieure coopérant avec des rainures de forme correspondante pratiquées sur l'alésage 27a du deuxième arbre intermédiaire 27.

Une tige d'actionneur 15 est montée à rotation dans le fourreau axial 14 et destinée à être déplacée axialement suivant l'axe X₂-X₂ de façon à déplacer la cloche de blocage 13a dans une position décrabotée de découplage du deuxième arbre intermédiaire 27 avec le moyeu 26a de la deuxième roue dentée 26, visible sur les figures 4 et 5, ou une position crabotée de couplage du deuxième arbre intermédiaire 27 avec le moyeu 26a de la deuxième roue dentée 26, visible sur la figure 6. L'action de la cloche de blocage 13a permet de lier le deuxième arbre intermédiaire 27 avec la deuxième roue dentée 26 en marche avant comme en marche arrière de l'aéronef.

La tige d'actionneur 15 peut être actionnée par une poignée 16 de manière manuelle par l'extérieur de l'aéronef. En effet, les phases de manœuvre de l'aéronef étant réalisées à proximité des bâtiments, il est aisé pour les opérateurs présents au sol d'intervenir pour actionner manuellement les moyens de blocage 11.

Tel qu'illustré sur la figure 4, un moyen de maintien en position 17 de la tige d'actionneur 15 est solidaire du carter 21 et comprend un ressort 17a et une bille 17b. Le moyen de maintien en position 17 permet de maintenir en position découplée les moyens de blocage 11. On notera que l'on pourrait prévoir tout autre moyen de maintien en position des moyens de blocage 11.

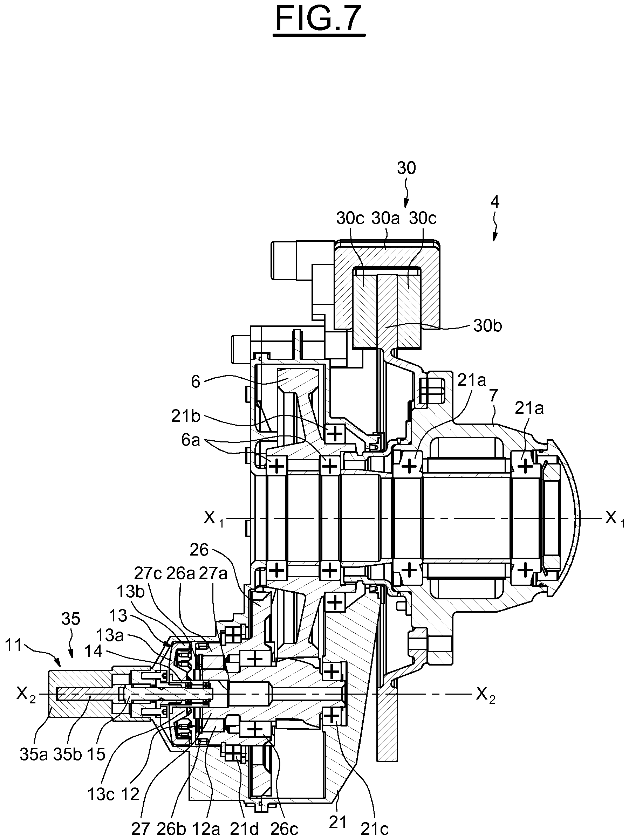

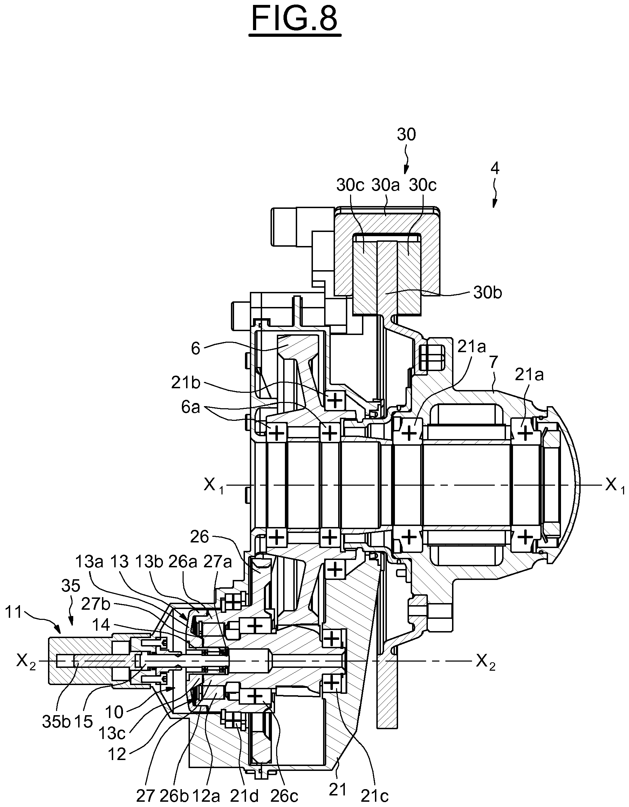

Le mode de réalisation illustré sur les figures 7 et 8, dans lequel les mêmes éléments ont les mêmes références, diffère essentiellement du mode de réalisation illustré aux figures 1 à 6 par l'actionnement télécommandé de la tige d'actionneur 15 des moyens de blocage 11.

Tel que représenté sur les figures 7 et 8, la tige d'actionneur 15 est actionnée de manière électrique par un vérin électrique à vis 35. Le vérin électrique à vis 35 comporte un carter de vérin 35a renfermant un rotor (non représenté) pourvu d'un taraudage d'axe X₂-X₂ coopérant avec une tige filetée 35b solidaire de la tige d'actionneur 15. La tige filetée 35b, en liaison hélicoïdale avec le rotor tournant dans le carter de vérin 35a, transmet un mouvement axial à la cloche de blocage 13a par l'intermédiaire du fourreau d'entraînement 14 et de la tige d'actionneur 15. La cloche de blocage 13a est ainsi déplacée suivant l'axe X₂-X₂ dans une position décrabotée de découplage du deuxième arbre intermédiaire 27 avec le moyeu 26a de la deuxième roue dentée 26, visible sur la figure 7, ou dans une position crabotée de couplage du deuxième arbre intermédiaire 27 avec le moyeu 26a de la deuxième roue dentée 26, visible sur la figure 8.

Lorsque les moyens de blocage 11 sont actionnés, le deuxième arbre intermédiaire 27 est lié au moyeu 26a de la deuxième roue dentée 26, de sorte que la fonction roue-libre des éléments anti-retour 12a du dispositif de roue-libre est bloquée.

Le vérin à vis 35 peut être alimenté en énergie électrique par une source d'alimentation externe durant les phases de manœuvre. En variante, on pourrait prévoir de l'alimenter par une batterie embarquée ou par toute autre source d'énergie de l'aéronef.

Le système de freinage 30 est représenté en détail sur les figures 7 et 8 et comprend un disque 30b fixé sur le moyeu de roue 7 et des plaquettes de frein 30c disposées de chaque côté du disque 30b et venant frotter de chaque côté du disque 30b. Les plaquettes de frein 30c sont maintenues dans un étrier 30a ou une chape de frein fixé au carter de réduction 21.

Grâce à l'invention qui vient d'être décrite, la circulation au sol d'un aéronef est réalisée de manière aisée, tout en intégrant la protection du système de motorisation de roue.

En effet, lors de la phase de déplacement en marche avant, le moteur électrique transmet un couple de rotation à la roue afin de l'entraîner par l'intermédiaire du dispositif de roue-libre et des moyens de réduction. Grace au dispositif de roue-libre, lorsque l'aéronef atterrit ou roule à vitesse élevée en marche avant, le couple de rotation n'est pas transmis dans un deuxième sens de transmission de couple, de la roue vers le moteur électrique. Le moteur électrique n'est donc pas entraîné en rotation par la roue.

De plus, dans un mode de réalisation, les moyens de blocage, actionnés lors des phases de manœuvre, permettent de contrer le phénomène de roue-libre et ainsi permettent au moteur de transmettre un couple de rotation à la roue en marche avant comme en marche arrière.

Enfin, le système de motorisation de roue peut intégrer une protection supplémentaire en cas de sur-couple, par exemple lorsque le dispositif de roue-libre est défaillant.

## Revendications

1. Système de motorisation de roue, notamment pour la circulation au sol d'un aéronef, comprenant un moteur électrique (5), un organe d'entraînement (6) configuré pour être solidaire du moyeu (7) de la roue (2), un dispositif d'embrayage (10) reliant l'arbre de sortie (5a) du moteur (5) à l'organe d'entraînement (6) par l'intermédiaire de moyens de réduction (20), le dispositif d'embrayage (10) comprenant un dispositif de roue-libre (12) permettant, en marche avant de l'aéronef, la transmission du couple de rotation uniquement dans un premier sens de transmission de couple, le dispositif de roue-libre (12) comprenant des éléments anti-retour (12a) montés entre une bague intérieure (27) et une bague extérieure (26a), le dispositif d'embrayage (10) comprenant des moyens de blocage (11) de la fonction roue-libre du dispositif de roue-libre (12) **caractérisé en ce que** lesdits moyens de blocage comportent une cloche de blocage (13a), de même axe que l'axe du dispositif de roue-libre (12), présentant sur sa périphérie des crabots d'entrainement (13b) destinés à coopérer avec la bague extérieure (26a) et sur sa partie centrale des crabots d'entrainement (13c) destinés à coopérer avec la bague intérieure (27).

2. Système de motorisation de roue selon la revendication 1, dans lequel les moyens de blocage (11) sont actionnables manuellement ou électriquement.

3. Système de motorisation de roue selon l'une quelconque des revendications précédentes, dans lequel les moyens de réduction (20) comprennent un pignon moteur (22) lié à l'arbre de sortie (5a) du moteur électrique (5) et engrainant avec un arbre intermédiaire (24).

4. Système de motorisation de roue selon l'une quelconque des revendications précédentes, dans lequel les moyens de réduction (20) comprennent au moins deux étages de réduction.

5. Système de motorisation de roue selon la revendication 4, dans lequel le dispositif de roue-libre (12) est disposé entre les étages de réduction.

6. Système de motorisation de roue selon l'une quelconque des revendications précédentes, dans lequel les moyens de réduction (20) comprennent trois étages de réduction.

7. Système de motorisation de roue selon la revendication 6, dans lequel le premier étage de réduction est constitué par l'engrenage du pignon moteur (22) et d'une première roue dentée (23) liée à un premier arbre intermédiaire (24), le deuxième étage de réduction est constitué par l'engrenage d'un premier pignon de réducteur (25) lié au premier arbre intermédiaire (24) et d'une deuxième roue dentée (26) liée à un deuxième arbre intermédiaire (27), et le troisième étage de réduction est constitué par l'engrenage d'un deuxième pignon de réducteur (28) lié au deuxième arbre intermédiaire (27) et de l'organe d'entraînement (6).

8. Système de motorisation de roue selon la revendication 7, dans lequel le dispositif d'embrayage (10) est disposé entre les deuxième et troisième étages de réduction.

9. Système de motorisation de roue selon la revendication 8, dans lequel le moyeu (26a) de la deuxième roue dentée (26) fait office de bague extérieure pour les éléments anti-retour (12a) et le deuxième arbre intermédiaire (27) fait office de bague intérieure pour les éléments anti-retour (12a).

10. Système de motorisation de roue selon la revendication 9, dans lequel les crabots (13b) d'entraînement disposés sur la périphérie de la cloche de blocage (13a) sont espacés les uns des autres et destinés à coopérer avec des évidements (26b) de forme correspondante sur la deuxième roue dentée (26) et dans lequel les crabots d'entraînement (13c) disposé sur sa partie centrale de la cloche de blocage (13a) sont espacés les uns des autres et destinés à coopérer avec des évidements (27b) de forme correspondante sur le deuxième arbre intermédiaire (27).

11. Système de motorisation de roue selon l'une quelconque des revendications 7 à 10, dans lequel les arbres intermédiaires (24, 27) sont configurés pour être parallèles à l'axe (X₁-X₁) du moyeu (7) de la roue (2).

12. Système de motorisation de roue selon l'une quelconque des revendications précédentes, dans lequel l'organe d'entraînement (6) est une couronne dentée.

13. Système de motorisation de roue selon l'une quelconque des revendications précédentes, comprenant un moyen de protection mécanique (9a) contre le sur-couple apte à découpler l'organe d'entraînement (6) du moyeu de roue (7) lorsque le couple transmis au moyeu de roue (7) par l'organe d'entraînement (6) est supérieur à une valeur de seuil.

14. Aéronef, notamment hélicoptère, comprenant au moins une roue munie d'un système de motorisation (4) de roue selon l'une quelconque des revendications précédentes.

15. Aéronef, notamment hélicoptère, selon la revendication 14 comprenant au moins un train d'atterrissage pourvu de deux roues munies chacune d'un système de motorisation (4) de roue selon l'une quelconque des revendications 1 à 13.

## Patentansprüche

1. Radmotorisierungssystem, insbesondere zum Verkehren eines Luftfahrzeugs am Boden, umfassend einen Elektromotor (5), ein Antriebsorgan (6), das dazu eingerichtet ist, fest mit einer Nabe (7) des Rades (2) verbunden zu werden, eine Kupplungsvorrichtung (10), welche die Abtriebswelle (5a) des Motors (5) mit dem Antriebsorgan (6) über Untersetzungseinrichtungen (20) verbindet, wobei die Kupplungsvorrichtung (10) eine Freilaufvorrichtung (12) umfasst, die bei Vorwärtsfahrt des Luftfahrzeugs die Übertragung des Drehmoments nur in eine Drehmomentübertragungsrichtung erlaubt, wobei die Freilaufvorrichtung (12) Rücklaufsperrelemente (12a) umfasst, die zwischen einem Innenring (27) und einem Außenring (26a) gelagert sind, wobei die Kupplungsvorrichtung (10) Sperreinrichtungen (11) zum Sperren der Freilauffunktion der Freilaufvorrichtung (12) umfasst, **dadurch gekennzeichnet, dass** die Sperreinrichtungen eine mit der Freilaufvorrichtung (12) achsgleiche Sperrglocke (13a) umfassen, die an ihrem Umfang Antriebsklauen (13b), die dazu bestimmt sind, mit dem Außenring (26a) zusammenzuwirken, und an ihrem Mittelteil Antriebsklauen (13c), die dazu bestimmt sind, mit dem Innenring (27) zusammenzuwirken, aufweist.

2. Radmotorisierungssystem nach Anspruch 1, bei dem die Sperreinrichtungen (11) manuell oder elektrisch betätigbar sind.

3. Radmotorisierungssystem nach einem der vorhergehenden Ansprüche, bei dem die Untersetzungseinrichtungen (20) ein Antriebsritzel (22) umfassen, das mit der Abtriebswelle (5a) des Elektromotors (5) verbunden ist und mit einer Zwischenwelle (24) in Zahneingriff steht.

4. Radmotorisierungssystem nach einem der vorhergehenden Ansprüche, bei dem die Untersetzungseinrichtungen (20) mindestens zwei Untersetzungsstufen umfassen.

5. Radmotorisierungssystem nach Anspruch 4, bei dem die Freilaufvorrichtung (12) zwischen den Untersetzungsstufen angeordnet ist.

6. Radmotorisierungssystem nach einem der vorhergehenden Ansprüche, bei dem die Untersetzungsmittel (20) drei Untersetzungsstufen umfassen.

7. Radmotorisierungssystem nach Anspruch 6, bei dem die erste Untersetzungsstufe durch den Zahneingriff des Antriebsritzels (22) und eines ersten Zahnrades (23), das mit einer ersten Zwischenwelle (24) verbunden ist, gebildet wird, die zweite Untersetzungsstufe durch den Zahneingriff eines ersten Untersetzungsritzels (25), das mit der ersten Zwischenwelle (24) verbunden ist, und eines zweiten Zahnrades (26), das mit einer zweiten Zwischenwelle (27) verbunden ist, gebildet wird, und die dritte Untersetzungsstufe durch den Zahneingriff eines zweiten Untersetzungsritzels (28), das mit der zweiten Zwischenwelle (27) verbunden ist, und des Antriebsorgans (6) gebildet wird.

8. Radmotorisierungssystem nach Anspruch 7, bei dem die Kupplungsvorrichtung (10) zwischen der zweiten und der dritten Untersetzungsstufe angeordnet ist.

9. Radmotorisierungssystem nach Anspruch 8, bei dem die Nabe (26a) des zweiten Zahnrades (26) als Außenring für die Rücklaufsperrelemente (12a) fungiert und die zweite Zwischenwelle (27) als Innenring für die Rücklaufsperrelemente (12a) fungiert.

10. Radmotorisierungssystem nach Anspruch 9, bei dem die am Umfang der Sperrglocke (13a) angeordneten Antriebsklauen (13b) voneinander beabstandet sind und dazu bestimmt sind, mit Ausnehmungen (26b) von korrespondierender Form am zweiten Zahnrad (26) zusammenzuwirken, und bei dem die am Mittelteil der Sperrglocke (13a) angeordneten Antriebsklauen (13c) voneinander beabstandet sind und dazu bestimmt sind, mit Ausnehmungen (27b) von korrespondierender Form an der zweiten Zwischenwelle (27) zusammenzuwirken.

11. Radmotorisierungssystem nach einem der Ansprüche 7 bis 10, bei dem die Zwischenwellen (24, 27) dazu eingerichtet sind, parallel zur Achse (X₁-X₁) der Nabe (7) des Rades (2) zu sein.

12. Radmotorisierungssystem nach einem der vorhergehenden Ansprüche, bei dem das Antriebsorgan (6) ein Zahnkranz ist.

13. Radmotorisierungssystem nach einem der vorhergehenden Ansprüche, umfassend eine mechanische Schutzeinrichtung (9a) zum Schutz vor dem Überdrehmoment, die geeignet ist, das Antriebsorgan (6) von der Radnabe (7) zu entkoppeln, wenn das vom Antriebsorgan (6) an die Radnabe (7) übertragene Drehmoment größer als ein Schwellenwert ist.

14. Luftfahrzeug, insbesondere Hubschrauber, mit mindestens einem Rad, das mit einem Radmotorisierungssystem (4) nach einem der vorhergehenden Ansprüche ausgestattet ist.

15. Luftfahrzeug, insbesondere Hubschrauber, nach Anspruch 14 mit mindestens einem Fahrwerk, das mit zwei Rädern versehen ist, von denen jedes mit einem Radmotorisierungssystem (4) nach einem der Ansprüche 1 bis 13 ausgestattet ist.

## Claims

1. Wheel motorization system, notably for an aircraft running along the ground, comprising an electric motor (5), a driving member (6) configured to be integral with the hub (7) of the wheel (2), a clutch device (10) connecting the output shaft (5a) of the motor (5) to the driving member (6) via reduction means (20), the clutch device (10) comprising a freewheel device (12) allowing, when the aircraft is travelling forwards, transmission of the rotational torque only in a first torque transmission direction, the freewheel device (12) comprising non-return elements (12a) mounted between an inner ring (27) and an outer ring (26a), the clutch device (10) comprising locking means (11) of the freewheel function of the freewheel device (12), **characterized in that** said locking means comprise a locking bell (13a) with the same axis as the freewheel device (12) and exhibiting on its periphery driving claws (13b) intended to cooperate with the outer ring (26a) and on the central section driving claws (13c) intended to cooperate with the inner ring (27).

2. Wheel motorization system according to Claim 1, wherein the locking means (11) can be actuated manually or electrically.

3. Wheel motorization system according to any one of the preceding claims, wherein the reduction means (20) comprise a drive pinion (22) attached to the output shaft (5a) of the electric motor (5) and engaging with an intermediate shaft (24).

4. Wheel motorization system according to any one of the preceding claims, wherein the reduction means (20) comprise at least two reduction stages.

5. Wheel motorization system according to Claim 4, wherein the freewheel device (12) is disposed between the reduction stages.

6. Wheel motorization system according to any one of the preceding claims, wherein the reduction means (20) comprise three reduction stages.

7. Wheel motorization system according to Claim 6, wherein the first reduction stage is made up of the engagement of the drive pinion (22) and a first toothed wheel (23) attached to a first intermediate shaft (24), the second reduction stage is made up of the engagement of a first reduction pinion (25) attached to the first intermediate shaft (24) and a second toothed wheel (26) attached to a second intermediate shaft (27), and the third reduction stage is made up of the engagement of a second reduction pinion (28) attached to the second intermediate shaft (27) and of the driving member (6).

8. Wheel motorization system according to Claim 7, wherein the clutch device (10) is disposed between the second and third reduction stages.

9. Wheel motorization system according to Claim 8, wherein the hub (26a) of the second toothed wheel (26) acts as an outer ring for the non-return elements (12a) and the second intermediate shaft (27) acts as an inner ring for the non-return elements (12a).

10. Wheel motorization system according to Claim 9, wherein the driving claws (13b) disposed on the periphery of the locking bell (13a) are spaced apart from one another and intended to cooperate with similarly shaped recesses (27b) on the second intermediate shaft (27).

11. Wheel motorization system according to any one of Claims 7 to 10, wherein the intermediate shafts (24, 27) are configured to be parallel to the axis (X₁-X₁) of the hub (7) of the wheel (2).

12. Wheel motorization system according to any one of the preceding claims, wherein the driving member (6) is a toothed gear ring.

13. Wheel motorization system according to any one of the preceding claims, comprising a mechanical protection means (9a) against overtorque capable of decoupling the driving member (6) of the wheel hub (7) when the torque transmitted to the wheel hub (7) by the driving member (6) is greater than a threshold value.

14. Aircraft, notably a helicopter, comprising at least one wheel fitted with a wheel motorization system (4) according to any one of the preceding claims.

15. Aircraft, notably a helicopter, according to Claim 14, comprising at least one landing gear provided with two wheels each fitted with a wheel motorization system (4) according to any one of the Claims 1 to 13.
